# EUROPÄISCHE PATENTANMELDUNG

(11) **EP 1 703 666 A1**
(43) Veröffentlichungstag der Anmeldung: **20.09.2006**
(21) Anmeldenummer: 05005588.8
(22) Anmeldetag: 15.03.2005
(51) Int. Cl.: H04L 12/24, G06F 17/30

(54) **Netzwerkmanagement mit adaptiven verteilten Transaktionen**

(71) Anmelder: SIEMENS AKTIENGESELLSCHAFT, 80333 München (DE)
(72) Erfinder: Goerge, Jürgen, Dr., 81375 München (DE); Kleegrewe, Christian, 85386 Eching (DE); Olpp, Dieter, Dr., 81829 München (DE); Sanneck, Henning, Dr., 81667 München (DE); Sokol, Joachim, 82008 Unterhaching (DE); Southall, Alan, 81247 München (DE)

(57) **Zusammenfassung**

Die Erfindung betrifft ein Verfahren zum Betreiben eines zumindest ein Managersystem (MANAGER, TRANSACTION CREATION LOGIC, TRANSACTION MANAGER, SYNC PROCEDURE) und mehrere Agenten (AGENT 1, AGENT 2, AGENT 3) umfassenden Managementnetzes eines Kommunikationssystems. Von einem oder mehreren Agenten (AGENT 1, AGENT 2, AGENT 3) werden voneinander abhängige Daten gespeichert. Das Managersystem (MANAGER, TRANSACTION CREATION LOGIC, TRANSACTION MANAGER, SYNC PROCEDURE) sendet eine Aufforderung zur Durchführung einer Mehrzahl von Änderungen betreffend die Daten. Lediglich ein Teil der Änderungen wird durchgeführt und das Managersystem (MANAGER, TRANSACTION CREATION LOGIC, TRANSACTION MANAGER, SYNC PROCEDURE) empfängt Informationen über die Durchführung des Teils der Änderungen. Erfindungsgemäß wird von dem Managersystem (MANAGER, TRANSACTION CREATION LOGIC, TRANSACTION MANAGER, SYNC PROCEDURE) nach dem Empfang der Informationen entschieden, den durchgeführten Teil der Änderungen beizubehalten und das Kommunikationssystem mit dem durchgeführten Teil der Änderungen zu betreiben. Weiterhin betrifft die Erfindung ein Managersystem zur Durchführung des Verfahrens.

## Beschreibung

Die Erfindung betrifft ein Verfahren zum Betreiben eines zumindest ein Managersystem und mehrere Agenten umfassenden Managementnetzes eines Kommunikationssystems, bei dem von einem oder mehreren Agenten voneinander abhängige Daten gespeichert werden. Weiterhin betrifft die Erfindung ein Managersystem zur Durchführung des Verfahrens.

Gemäß den Prinzipien eines Managementnetzes, auch als TMN-Prinzipien (TMN: Telecommunications Management Network) bezeichnet, existieren mehrere Managementschichten für das Management eines Kommunikationssystems - wie beispielsweise eines Mobilfunkkommunikationssystems -, wobei jede Schicht mit Ausnahme der obersten und untersten Schicht eine doppelte Funktion, nämlich eine Manager- und eine Agentenfunktion besitzt. Im managenden System ("managing system") übt jede Ebene außer der untersten eine Manager-Funktion für die darunterliegende Ebene aus. Im gemanagten System ("managed system") kommt jeder Ebene außer der obersten eine AgentenFunktion für die nächst höhere Ebene zu.

Manager starten zur Netzüberwachung und -kontrolle Operationen, indem sie sogenannte "requests" versenden, die von Agenten ausgeführt werden, und erhalten entsprechende Rückmeldungen, sogenannte "responses", von den Agenten. Elemente des Telekommunikationsnetzes, auch als Ressourcen des Telekommunikationsnetzes bezeichnet, die in einer TMN-Hierarchie die Rolle eines Agenten ausüben, erkennen relevante Ereignisse, sogenannte "events", wie z.B. Alarme, generieren entsprechende Mitteilungen, sogenannte "notifications", und übertragen sie in Form von Ereignismeldungen, sogenannten "event reports", an Manager, um ein effizientes Netzmanagement zu ermöglichen.

Das Netzwerkmanagement kann unter anderem das Fehlermanagement (Fault-Management) und/oder das Konfigurationsmanagement (Configuration Management) und/oder das Sicherheitsmanagement (Security-Management) und/oder das des Abrechnungsmanagement (Accounting-Management) und/oder das Leistungsmanagement (Performance-Management) umfassen. Durch das Netzwerkmanagement sollen geeignete Mechanismen zur Informationsverteilung und -verwaltung bereitgestellt werden, so dass bei Bedarf ein umfassendes Bild über den Netzzustand zur Verfügung steht und die einzelnen Objekte des Telekommunikationsnetzes effizient überwacht und konfiguriert werden können.

Die Manager-Agent-Kommunikation erfolgt über so genannte Management-Schnittstellen bzw. Manager-Agent-Schnittstellen, die in einer objekt-orientierten Umgebung durch ein Kommunikationsprotokoll, wie z.B. CMIP (Common Management Information Protocol) nach ITU-T X.711 oder CORBA (Common Object Request Broker Architecture), und durch ein Objektmodell gekennzeichnet sind. Objektmodelle dienen der Modellierung von Ressourcen des Telekommunikationsnetzes, wobei diese Ressourcen bei der Modellierung in Objektklassen eingeteilt werden.

Solche Schnittstellen gibt es beispielsweise zwischen einerseits der Netzwerkelementmanagement-Ebene (Network Element Management Level) und andererseits der Netzwerkelement-Ebene (Network Element Level). Ein Beispiel für Netzeinrichtungen dieser Manager-Agent-Schnittstelle stellen die Betriebs- und Wartungszentren (OMC: Operation and Maintenance Center) auf der Seite der Netzwerkelementmanagement-Ebene dar, sowie auf der Seite der Netzwerkelement-Ebene Einrichtungen wie z.B. Basisstationen des Basisstationssystems (BSS: Base Station System) eines GSM Mobilfunknetzes, oder Basisstationen anderer Kommunikationsnetze, beispielsweise NodeB's eines UMTS Mobilfunknetzes (UMTS: Universal Mobile Telecommunication System), oder Funkzugangspunkte eines WLAN-Systems (WLAN: Wireless Local Area Network) beispielsweise gemäß einem der IEEE 802.11-Standards.

Management-Schnittstellen bzw. Manager-Agent-Schnittstellen existieren auch zwischen einerseits der Netzwerkmanagement-Ebene (Network Management Level) und andererseits der Netzwerkelementmanagement-Ebene. Ein Beispiel für Netzeinrichtungen zu dieser Manager-Agent-Schnittstelle stellen die Netzwerkmanagementzentren (NMC: Network Management Center) auf der Seite der Netzwerkmanagement-Ebene und die Betriebs- und Wartungszentren (OMC: Operation and Maintenance Center) auf der Seite der Netzwerkelementmanagement-Ebene z.B. im genannten GSM oder einem anderen Mobilfunk- oder Telekommunikationsnetz dar.

Der Erfindung liegt die Aufgabe zugrunde, ein effizientes Verfahren zum Betreiben eines Managementnetzes sowie ein Managersystem zur Durchführung des Verfahrens aufzuzeigen.

Diese Aufgabe wird durch ein Verfahren mit den Merkmalen des Anspruchs 1 und durch ein Managersystem mit Merkmalen eines nebengeordneten Anspruchs gelöst. Vorteilhafte Ausgestaltungen und Weiterbildungen sind Gegenstand von Unteransprüchen.

Bei dem erfindungsgemäßen Verfahren zum Betreiben eines zumindest ein Managersystem und mehrere Agenten umfassenden Managementnetzes eines Kommunikationssystems werden von einem oder mehreren Agenten voneinander abhängige Daten gespeichert. Das Managersystem sendet eine Aufforderung zur Durchführung einer Mehrzahl von Änderungen betreffend die Daten. Es wird lediglich ein Teil der Änderungen durchgeführt und das Managersystem empfängt Informationen über die Durchführung des Teils der Änderungen. Erfindungsgemäß wird von dem Managersystem nach dem Empfang der Informationen entschieden, den durchgeführten Teil der Änderungen beizubehalten und das Kommunikationssystem mit dem durchgeführten Teil der Änderungen zu betreiben.

Das Managersystem der Erfindung kann aus einer oder mehreren Einrichtungen bestehen, es weist eine Managerfunktionalität gegenüber den Agenten auf. In dem betrachteten Managementnetz speichern ein Agent oder mehrere Agenten voneinander abhängige Daten. Die Daten sind voneinander abhängig, wenn sie zum Beispiel nicht unabhängig voneinander geändert werden können, ohne dass es zu Inkonsistenzen im Datenraum kommt. Unter einer Änderung eines Datums wird das Hinzufügen des Datums, das Löschen des Datums, oder die Änderung eines Wertes des Datums verstanden.

In Bezug auf einen einzelnen Agenten kann es sich bei den voneinander abhängigen Daten z.B. um Kommunikationsparameter wie IP-Adressen und Routen handeln. Dies liegt darin begründet, dass die für ein Interface zu setzenden Routen zum Teil direkt von der auf dem Interface konfigurierten IP-Adresse abhängen. Bei voneinander abhängigen Daten verschiedener Agenten kann es sich z.B. um Daten betreffend die Konfiguration von benachbarten Zellen in einem zellularen Mobilfunkkommunikationssystem handeln, beispielsweise Daten betreffend Funkfrequenzen und Kodes. Diese Abhängigkeit besteht, da ein Wechsel zwischen den Zellen, d.h. ein Handover, möglich sein sollte. Ein anderes Beispiel für abhängige Daten mehrerer Agenten sind Kommunikationsparameter benachbarter Knoten, z.B. stehen die IP-Adressen von allen an einem LAN-Segment befindlichen Netzknoten in Abhängigkeit zueinander.

Das Managersystem fordert durch Versendung einer Aufforderung zur Durchführung einer Mehrzahl von Änderungen auf. Die Aufforderung wird zu dem oder den Agenten gesendet, welche die von der Änderung betroffenen Daten speichern oder speichern sollen. Es soll nicht nur eine Änderung sondern eine Mehrzahl von Änderungen durchgeführt werden. Bei der Gruppierung der Änderungen in diese Mehrzahl von Änderungen können insbesondere die Abhängigkeiten zwischen den Daten berücksichtigt werden.

Es werden nicht alle der geforderten Änderungen durchgeführt, vielmehr führt der oder die betroffenen Agenten nur einen Teil der Änderungen durch. Obwohl die Änderungen nur teilweise durchgeführt wurden, entscheidet das Managersystem, das Kommunikationssystem mit dem durchgeführten Teil der Änderungen zu betreiben, dass heißt insbesondere, das Kommunikationssystem so zu betreiben, als ob die Änderungen vollständig durchgeführt worden wären.

In Weiterbildung der Erfindung wird vor der Versendung der Aufforderung die Mehrzahl von Änderungen zu einer Transaktion zusammengefasst. Eine Transaktion stellt den Übergang von einem definierten Anfangszustand zu einem definierten Endzustand dar, wobei der Anfangszustand dem Zustand der Datenbanken der Agenten vor der Durchführung der Änderungen entspricht, und der Endzustand dem Zustand der Datenbanken der Agenten nach der Durchführung der Änderungen aller von dem Managersystem geforderten Änderungen.

Einer Ausgestaltung der Erfindung gemäß sendet das Managersystem an den oder die Agenten, welche den Teil der Änderungen durchgeführt haben, eine Nachricht mit einer Anweisung, diese Änderungen beizubehalten. Auf diese Weise werden die Agenten explizit über die Entscheidung des Managersystems informiert.

Vorteilhaft ist es, wenn die Änderungen der Daten eine Mehrzahl von Agenten betreffen und das Managersystem eine positive Bestätigung über die Durchführung des Teils der Änderungen von einem Teil der Agenten der Mehrzahl von Agenten empfängt. In diesem Fall richtet sich die Aufforderung zur Durchführung der Änderungen an mehrere Agenten. Jedoch führt ein Teil dieser mehreren Agenten die Änderungen nicht durch.

Weiterhin ist es möglich, dass die Änderungen Daten von genau einem Agenten betreffen und das Managersystem eine positive Bestätigung über die Durchführung des Teils der Änderungen von diesem Agenten empfängt. In diesem Fall ergeht die Aufforderung zur Durchführung der Änderungen an lediglich einen Agenten, dessen Daten von den Änderungen betroffen sind. Dieser Agent führt jedoch nur einen Teil der geforderten Änderungen durch und informiert das Managersystem hierüber.

In Weiterbildung der Erfindung führt das Managersystem den durchgeführten Teil der Änderungen nach Empfang der Informationen in einer Datenbank des Managersystems durch. Dadurch, dass der Teil der Änderungen sowohl in der Datenbank bzw. den Datenbanken der Agenten als auch in der Datenbank des Managersystems durchgeführt wurde, ist eine Synchronisierung zwischen den Inhalten der Datenbanken auf Manager- und Agentenseite hergestellt. Die Durchführung der Änderungen auf Managerseite erfolgt erst, nachdem das Managersystem von der Durchführung der Änderungen durch den oder die Agenten erfahren hat.

In Weiterbildung der Erfindung wird das Kommunikationssystem mit dem durchgeführten Teil der Änderungen betrieben und zu einem späteren Zeitpunkt werden die nicht durchgeführten Änderungen der Mehrzahl von Änderungen durchgeführt. Das Managersystem kann eine Aufforderung zur Durchführung der noch nicht durchgeführten Änderungen an die betroffenen Agenten ergehen lassen.

Besonders vorteilhaft ist es, wenn die Entscheidung vom Managersystem getroffen wird unter Verwendung eines Schwellenwertes hinsichtlich einer Anzahl von Agenten, welche den durchgeführten Teil der Änderungen durchgeführt haben, und/oder hinsichtlich einer Anzahl von durchgeführten Änderungen des Teils der durchgeführten Änderungen. Hinsichtlich der Anzahl von Agenten, welche den durchgeführten Teil der Änderungen durchgeführt haben, kann der Schwellenwert sich zum Beispiel auf alle Agenten beziehen, oder nur auf bestimmte Agenten, wie zum Beispiel auf Agenten einer bestimmten Funktionalität oder einer bestimmten geografischen Region. Insbesondere kann die Entscheidung von dem Managersystem getroffen werden unter Berücksichtigung einer Gruppierung von Agenten, so zum Beispiel eine Gruppierung in Prioritätsklassen, in funktionell gleiche Agenten, oder in Agenten eines geografischen oder logischen Bereiches des Kommunikationssystems. Bezüglich der Anzahl von Änderungen kann sich der Schwellenwert auf alle durchgeführten Änderungen beziehen, oder nur auf bestimmte Änderungen, so zum Beispiel auf Änderungen, welche von bestimmten Agenten durchgeführt wurden, oder auf Änderungen hinsichtlich bestimmter Daten. Eine Kombination verschiedener Schwellenwerte kann verwendet werden.

In Ausgestaltung der Erfindung werden nach dem Empfang der Informationen nicht durchgeführte Änderungen von dem Managersystem zu einer Mehrzahl von Transaktionen gruppiert. Im Anschluss an die Gruppierung der Änderungen zu Transaktionen ergeht vorzugsweise eine Aufforderung des Managersystems zur Durchführung der Transaktionen.

Besonders vorteilhaft ist die Verwendung der Erfindung, wenn zur Synchronisierung von von dem Managersystem und den Agenten gespeicherten Daten ein Master-Replica-Verfahren eingesetzt wird.

Das erfindungsgemäße Managersystem weist Mittel auf zum Erstellen und Senden einer Aufforderung zur Durchführung einer Mehrzahl von Änderungen betreffend die Daten, sowie Mittel zum Empfangen und Verarbeiten von Informationen über die Durchführung von lediglich einem Teil der Änderungen, und Mittel zum Entscheiden nach dem Empfang der Informationen, den durchgeführten Teil der Änderungen beizubehalten und das Kommunikationssystem mit dem durchgeführten Teil der Änderungen zu betreiben.

Das erfindungsgemäße Managersystem eignet sich insbesondere zur Durchführung des erfindungsgemäßen Verfahrens, wobei dies auch auf die Ausgestaltungen und Weiterbildungen zutreffen kann. Hierzu kann es weitere geeignete Mittel aufweisen.

Im folgenden wird die Erfindung anhand eines Ausführungsbeispiels näher erläutert. Dabei zeigen:
- Figur 1:: einen Ausschnitt aus einem Managementnetz eines Kommunikationssystems,
- Figur 2:: einen Nachrichtenaustausch im Rahmen des erfindungsgemäßem Verfahrens.

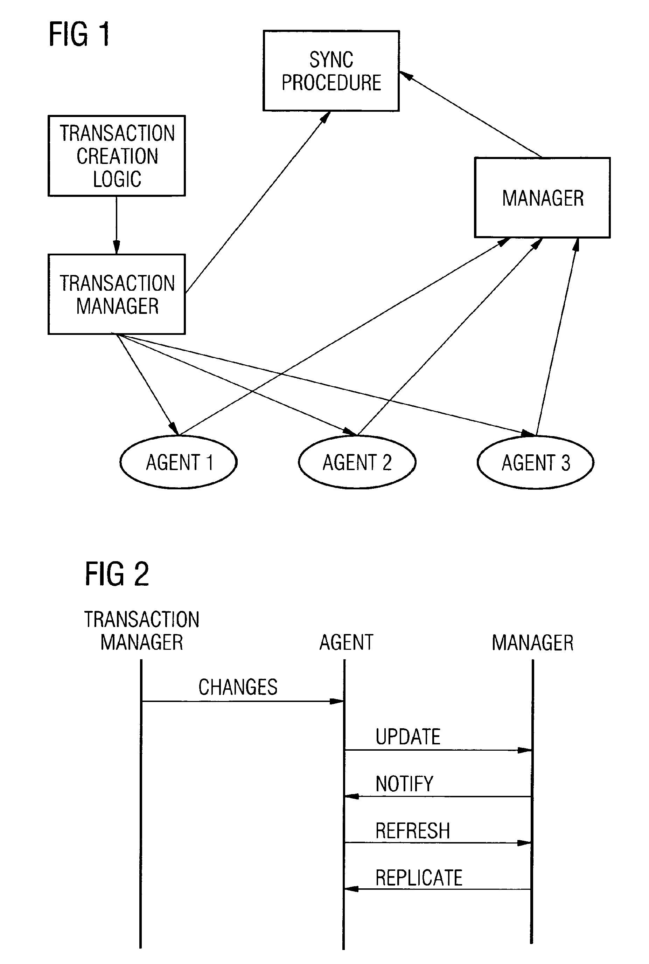

Der in Figur 1 dargestellte Ausschnitt aus einem Managementnetz eines Kommunikationssystems umfasst das Managersystem mit dem Manager MANAGER, den Bestandteilen TRANSACTION CREATION LOGIC, TRANSACTION MANAGER, und SYNC PROCEDURE. Weiterhin umfasst das Managementnetz die Agenten AGENT 1, AGENT 2 und AGENT 3. Bei dem betrachteten hierarchischen Managementnetz kann es sich z.B. um ein Managementnetz eines Mobilfunkkommunikationssystems der zweiten oder dritten Generation handeln, oder um ein Managementsystem eines Festnetzes z.B. nach einem ITU oder IETF Standard.

Die Agenten AGENT 1, AGENT 2 und AGENT 3 weisen jeweils eine Datenbank zur Speicherung von Daten, wie z.B. Konfigurationsinformationen, auf. Auch der Manager MANAGER weist eine Datenbank zur Speicherung dieser Informationen auf. Für den fehlerfreien Betrieb des Kommunikationssystems müssen die Daten der Datenbanken des Managers MANAGER und der Agenten AGENT 1, AGENT 2 und AGENT 3 übereinstimmen. Um einen effizienten Abgleich der Inhalte dieser Datenbanken zu gewährleisten, werden Transaktionen eingesetzt. Eine Transaktion entspricht hierbei dem Übergang von einem definierten Ausgangszustand in einen definierten Endzustand. Dies bedeutet, dass bei einer Transaktion eine Datenbank von einem ersten konsistenten Zustand in einen zweiten konsistenten Zustand übergeführt wird. In Bezug auf eine von einem Agenten durchgeführte Änderungen bedeutet dies, dass der Agent die Änderung gemäß einer Transaktion durchführt und in dem Fall, dass er vom Manager MANAGER aufgefordert wird, die Änderung rückgängig zu machen, von dem Endzustand der Transaktion zu dem Ausgangszustand der Transaktion zurückehren kann. Transaktionen sind beschrieben z.B. in M.T. Özsu, P. Valduriez, Principles of Distributed Database Systems, 2nd edition, Prentice-Hall, 1999.

Es werden Transaktionen betrachtet, welche aus einer Mehrzahl von Änderungen bestehen. Hierzu wird der Bestandteil TRANSACTION CREATION LOGIC des Managersystems eingesetzt, welcher in dem Manager MANAGER oder auch in einer von dem Manager MANAGER getrennten Einrichtung realisiert sein kann. Die Aufgabe des Bestandteils TRANSACTION CREATION LOGIC ist es, eine Mehrzahl von durchzuführenden Änderungen der von den Agenten AGENT 1, AGENT 2 und AGENT 3 gespeicherten Daten zu einer Transaktion zusammenzufassen. Im folgenden wird zuerst der Fall betrachtet, dass die Transaktion Änderungen von Daten aller Agenten AGENT 1, AGENT 2 und AGENT 3 betrifft. Alternativ ist es jedoch auch möglich, dass die Transaktion Daten von nur manchen der Agenten AGENT 1, AGENT 2 und AGENT 3 betrifft, oder auch mehrere Änderungen von Daten von nur einem der Agenten AGENT 1, AGENT 2 und AGENT 3.

Die Erzeugung der Transaktion durch den Bestandteil TRANSACTION CREATION LOGIC erfolgt, indem Vorgaben einer höheren Managementeinrichtung mit dem Ist-Zustand der Datenbanken der Agenten AGENT 1, AGENT 2 und AGENT 3 verglichen werden. Hierbei wird berücksichtigt, dass die Daten der Datenbanken der Agenten AGENT 1, AGENT 2 und AGENT 3 zumindest teilweise nicht voneinander unabhängig sind. So existieren beispielsweise Daten, welche von allen Agenten AGENT 1, AGENT 2 und AGENT 3 gespeichert werden, und daher im Falle einer Aktualisierung von allen Agenten AGENT 1, AGENT 2 und AGENT 3 geändert werden müssen. Weiterhin ist es beispielsweise möglich, dass eine bestimmte Änderung in der Datenbank eines der Agenten AGENT 1, AGENT 2 und AGENT 3 eine Änderung eines anderen Datums in der Datenbank eines anderen der Agenten AGENT 1, AGENT 2 und AGENT 3 zur Folge haben sollte, um die Konsistenz der verschiedenen Datenbanken aufrechtzuerhalten. Der Bestandteil TRANSACTION CREATION LOGIC berücksichtigt diese Abhängigkeiten bei der Erzeugung der Transaktionen, indem Änderungen, welche gemeinsam durchzuführen sind oder einander bedingen, in einer Transaktion zusammengefasst werden. Die im Rahmen der Erfindung betrachteten Transaktionen bestehen somit aus einer Mehrzahl von Änderungen, wobei diese Änderungen voneinander abhängige Daten betreffen.

Weiterhin existiert in dem Managersystem der Bestandteil TRANSACTION MANAGER, welcher wie auch der Bestandteil TRANSACTION CREATION LOGIC in dem Manager MANAGER oder in einer von dem Manager MANAGER getrennten Einrichtung realisiert sein kann. Der Bestandteil TRANSACTION MANAGER wird von dem Bestandteil TRANSACTION CREATION LOGIC über eine durchzuführende Transaktion informiert. Die Aufgabe des Bestandteiles TRANSACTION CREATION LOGIC ist es, die Agenten AGENT 1, AGENT 2 und AGENT 3 über die durchzuführenden Änderungen zu benachrichtigen. Die Agenten AGENT 1, AGENT 2 und AGENT 3 müssen nach Empfang der Benachrichtigung über die durchzuführenden Änderungen diese Änderungen in ihrer jeweiligen Datenbank umsetzen. Die Agenten AGENT 1, AGENT 2 und AGENT 3 haben keine Entscheidungsbefugnis darüber, ob die Änderung durchgeführt werden soll oder nicht, sofern die Durchführung der Änderung möglich ist. Die Durchführung einer Änderung ist einem Agenten AGENT 1, AGENT 2 und AGENT 3 z.B. dann nicht möglich, wenn hierdurch lokale Inkonsistenzen, d.h. Inkonsistenzen der Datenbank eines Agenten AGENT 1, AGENT 2 und AGENT 3, erzeugt würden. Auch in dem Fall, dass eine lokale Hardware eines Agenten AGENT 1, AGENT 2 und AGENT 3 aktuell nicht zugänglich ist, kann ein Agent AGENT 1, AGENT 2 und AGENT 3 gegebenenfalls eine geforderte Änderung nicht durchführen.

Die Agenten AGENT 1, AGENT 2 und AGENT 3 geben dem Manager MANAGER eine Rückmeldung darüber, ob die geforderte(n) Änderung(en) durchgeführt wurde(n). Diese Rückmeldung kann darin bestehen, dass die Änderung / die Änderungen vollständig durchgeführt wurden, dass die Änderungen / die Änderungen vollständig nicht durchgeführt wurden, oder dass ein Teil der Änderungen durchgeführt wurde. Empfängt der Manager MANAGER von einem der Agenten AGENT 1, AGENT 2 und AGENT 3 keine Rückmeldung über die Durchführung einer geforderten Änderung, so z.B. weil der jeweilige Agent AGENT 1, AGENT 2 und AGENT 3 keine Nachricht von dem Bestandteil TRANSACTION MANAGER empfangen konnte, wird nach Ablauf einer bestimmten Zeitspanne davon ausgegangen, dass der jeweilige Agent AGENT 1, AGENT 2 und AGENT 3 diese nicht durchgeführt hat.

Gemäß dem Stand der Technik darf bei Verwendung einer Transaktion lediglich der Endzustand oder der Anfangszustand der Transaktion vorliegen. Besteht z.B. eine Transaktion aus einer von einem ersten Agenten durchzuführenden Änderung und einer von einem zweiten Agenten durchzuführenden Änderung, und empfängt ein Manager von dem ersten Agenten eine positive Rückmeldung über die Durchführung der Änderung und von dem zweiten Agenten eine negative Rückmeldung über die Durchführung der Änderung, so muss der Manager den ersten Agenten auffordern, die Änderung rückgängig zu machen. D.h., da der Endzustand nicht erreicht werden konnte, muss der Anfangszustand der Transaktion wiederhergestellt werden. Es handelt sich hierbei um eine binäre Entscheidung zwischen dem Anfangs- und dem Endzustand.

Gemäß der Erfindung gibt der Manager MANAGER die Rückmeldungen der Agenten AGENT 1, AGENT 2 und AGENT 3 an den Bestandteil SYNC PROCEDURE weiter, welche in dem Manager MANAGER oder in einer getrennten Einrichtung realisiert sein kann. Der Bestandteil SYNC PROCEDURE empfängt weiterhin von dem Bestandteil TRANSACTION MANAGER Informationen über die durchzuführende Transaktion. Aus den von dem Manager MANAGER und von dem Bestandteil TRANSACTION MANAGER empfangenen Informationen kann der Bestandteil SYNC PROCEDURE ermitteln, ob die Transaktion vollständig, teilweise oder überhaupt nicht durchgeführt wurde. Bei einer vollständigen Durchführung liegt der Endzustand der Transaktion vor. Wurde keine von der Transaktion beinhaltete Änderung der Datenbanken der Agenten AGENT 1, AGENT 2 und AGENT 3 durchgeführt, so liegt der Anfangszustand der Transaktion vor. Wurde jedoch lediglich ein Teil der Änderungen durchgeführt, so liegt ein Zustand zwischen dem Anfangs- und dem Endzustand der Transaktion vor. Aufgabe des Bestandteils SYNC PROCEDURE ist es, in letzterem Fall zu entscheiden, wie in Bezug auf die teilweise durchgeführte Transaktion zu verfahren ist.

Gemäß der Erfindung entscheidet der Bestandteil SYNC PROCEDURE, die lediglich zum Teil durchgeführten Änderungen der Transaktion beizubehalten. Das Kommunikationsnetz wird somit zumindest zeitweilig mit dem Zustand der Datenbanken der Agenten AGENT 1, AGENT 2 und AGENT 3 betrieben, gemäß welchem nur ein Teil der Änderungen der Transaktion durchgeführt wurde. Besteht die Transaktion beispielsweise darin, einen Wert eines bestimmten Datums in den Datenbanken der Agenten AGENT 1, AGENT 2 und AGENT 3 zu ändern, und wurde die Änderung zwar von den Agenten AGENT 1 und AGENT 2, nicht aber von dem Agent AGENT 3 durchgeführt, so wird das Kommunikationssystem vorerst in dem Zustand betrieben, in welchem das bestimmte Datum in der Datenbank der Agenten AGENT 1 und AGENT 2 aktualisiert ist, während in der Datenbank des Agenten AGENT 3 das bestimmte Datum noch den alten Wert aufweist. Der bislang nicht durchgeführte Teil der Änderungen kann zu einem späteren Zeitpunkt nachgeholt werden, vorzugsweise, sobald dies dem oder den jeweiligen Agenten AGENT 1, AGENT 2 und AGENT 3 möglich ist. Vor Fertigstellung der gesamten Transaktion können die Agenten AGENT 1, AGENT 2 und AGENT 3, welche einen Teil der Transaktion bereits ausgeführt haben, aufgefordert werden, diese Änderungen rückgängig zu machen. Dies bedeutet, dass vor Erreichen des Endzustandes der Transaktion jederzeit der Anfangszustand wieder hergestellt werden kann.

Figur 2 zeigt einen Nachrichtenaustausch zwischen dem Bestandteil TRANSACTION MANAGER, einem Agenten AGENT und dem Manager MANAGER. Es wird davon ausgegangen, dass eine Transaktion von dem Bestandteil TRANSACTION CREATION LOGIC definiert wurde, welche eine Mehrzahl von Änderungen von voneinander abhängigen Daten der Datenbank des Agenten AGENT beinhaltet. Mit der Nachricht CHANGES wird der Agent AGENT von dem Bestandteil TRANSACTION MANAGER über die durchzuführenden Änderungen informiert bzw. zur Durchführung der Änderungen der Transaktion aufgefordert. Der Agent AGENT führt einen Teil der Änderungen durch und informiert den Manager MANAGER mit der Nachricht UPDATE darüber, welche Änderungen durchgeführt wurden. Der Manager MANAGER leitet die Informationen über die partiell durchgeführte Transaktion an den Bestandteil SYNC PROCEDURE weiter, wo entschieden wird, dass der durchgeführte Teil der Transaktion beibehalten werden soll. Der Manager MANAGER führt die von dem Agent AGENT durchgeführten Änderungen in Bezug auf seine eigene Datenbank durch und informiert den Agent AGENT mit der Nachricht NOTIFY darüber, dass eine Änderung in der Datenbank des Managers MANAGER erfolgt ist. Daraufhin fordert der Agent AGENT mit der Nachricht REFRESH bei dem Manager MANAGER Informationen über die in der Datenbank des Managers MANAGER durchgeführten Änderungen an. Der Manager MANAGER antwortet mit der Nachricht REPLICATE, welche dem Agenten AGENT anzeigt, dass in der Datenbank des Agenten AGENT keine Änderung durchzuführen ist. Hätte der Bestandteil SYNC PROCEDURE zuvor entschieden, dass die von dem Agenten AGENT durchgeführten Teile der Transaktion rückgängig zu machen sind, würde der Manager den Agenten AGENT mit der Nachricht REPLICATE darüber informieren, dass der Anfangszustand der Transaktion herzustellen ist.

Da von dem Bestandteil SYNC PROCEDURE entschieden wurde, den Zustand gemäß der teilweisen Durchführung der Transaktion beizubehalten, wird das Kommunikationssystem mit diesem Zustand der Datenbank des Agenten AGENT betrieben. Dies hat den Vorteil, dass der Betrieb nicht lange ausgesetzt werden muss und somit Zeit eingespart wird. Der Manager MANAGER kann den Agenten AGENT zu einem späteren Zeitpunkt auffordern, den noch nicht durchgeführten Teil der Änderungen der Transaktion nachzuholen.

Die Erfindung weist den Vorteil auf, dass die Anzahl der im Managementnetz zu übertragenden Nachrichten reduziert wird. Dies wirkt sich besonders deutlich in verteilten Systemen, d.h. Systemen mit einer Vielzahl von Datenbanken, aus. Wenn beispielsweise ein bestimmtes Datum in der Datenbank von 100 Agenten zu ändern ist, und 99 der Agenten die Änderung durchführen, während ein Agent die Änderung nicht durchführt, da er aktuell offline ist, müssen die 99 Agenten nicht aufgefordert werden, die Änderung des Datums rückgängig zu machen. Vielmehr kann das System in dem Zustand, gemäß welchem die 99 Agenten die Änderung durchgeführt haben und ein Agent die Änderung nicht durchgeführt hat, betrieben werden. Der eine Agent kann die Änderung zu einem späteren Zeitpunkt nachholen. Stellt sich heraus, dass der eine Agent die Änderungen auch zu dem späteren Zeitpunkt nicht durchführen kann, können die 99 Agenten aufgefordert werden, die Änderung zurückzusetzen.

Eine alternative Lösung wäre, anstelle einer Transaktion, welche die Änderung des Datums in den 100 Datenbanken beinhaltet, 100 einzelne sequentielle Transaktionen zu verwenden. Dies hat jedoch den Nachteil, dass die Durchführung des gesamten Vorgangs in der Regel deutlich mehr Zeit benötigt als die Durchführung der die 100 Änderungen enthaltenden Gesamttransaktion. Weiterhin ist es bei Einzeltransaktionen möglich, dass aufgrund der Tatsache, dass eine Transaktion nicht ausgeführt werden kann, die anderen Transaktionen blockiert werden.

Die Entscheidung darüber, ob der Zustand gemäß der partiellen Durchführung einer Transaktion aufrechterhalten werden soll, oder ob die Änderungen rückgängig zu machen sind, wird anhand von Entscheidungskriterien und -regeln getroffen. Im folgenden werden einige vorteilhafte Beispiele für die Ausgestaltung von Entscheidungskriterien und -regeln aufgeführt:
- Die Entscheidungskriterien können Schwellenwerte enthalten, wie z.B. "haben mehr als n Agenten die geforderten Änderungen durchgeführt, so wird der Zwischenzustand aufrechterhalten", oder "wurden mehr als 95 % der Änderungen durchgeführt, so wird der Zwischenzustand aufrechterhalten".
- Entscheidungskriterien können auf einer Programm-Logik mit IF, ELSE, THEN, NOT Befehlen basieren.
- Entscheidungskriterien und -regeln können z.B. aus statistischen Auswertungen des Verhaltens des Kommunikationssystems gewonnen werden.
- Die Agenten können in Prioritätsklassen eingestuft werden, so dass beispielsweise der Zustand gemäß der partiellen Transaktion aufrechterhalten wird, wenn alle Agenten der höchsten Prioritätsklassen die Änderungen durchgeführt haben.
- Das Managementnetz kann in Teilbereiche eingeteilt werden, so dass beispielsweise der Zustand gemäß der partiellen Transaktion aufrechterhalten wird, wenn alle Agenten eines bestimmten Teilbereichs des Managementnetzes die Änderungen durchgeführt haben.
- Weitere Gruppierungen der Agenten sind möglich, so z.B. in einem Funkkommunikationssystem eine Gruppierung aller Basisstationen, welche die gleichen Funkfrequenzen verwenden.
- Die Entscheidungskriterien und -regeln können in Bezug auf das betrachtete Kommunikationssystems z.B. von der Kommunikationstechnologie, der Topologie, den Sicherheitsanforderungen, der Größe, und den Wünschen des Betreibers abhängen.

Liegt keine geeignete Entscheidungsregel vor oder sind die vorhanden Kriterien und Regeln in der vorliegenden Situation nicht anwendbar, können Informationen über die vorliegende Situation an eine andere Einrichtung zur Entscheidung weitergeleitet werden. Auf diese Weise kann z.B. eine Person (Human Operator) informiert werden, welche die Entscheidung in solchen Situationen trifft.

Wird die Entscheidung getroffen, den Zustand gemäß der partiellen Durchführung der Transaktion beizubehalten und das Kommunikationssystem in diesem Zustand zu betreiben, kann eine Umgruppierung der noch nicht durchgeführten Änderungen erfolgen. Wurde beispielsweise eine Änderung eines ersten Datums von zwei Agenten nicht durchgeführt, und eine Änderung weiterer Daten von einem anderen Agenten nicht durchgeführt, so können von dem Bestandteil TRANSACTION CREATION LOGIC zwei neue Transaktion erzeugt werden, wobei die erste Transaktion die Änderung des ersten Datums durch die zwei Manager und die zweite Transaktion die Änderung der weiteren Daten durch den weiteren Manager beinhaltet.

Vorzugsweise wird das beschriebene Verfahren in Verbindung mit einem Master-Replica-Verfahren zur Synchronisierung von Datenbanken eingesetzt. Der Manager MANAGER weist hierbei die Master-Datenbank auf, während jeder der Agenten AGENT 1, AGENT 2 und AGENT 3 eine Replica-Datenbank aufweist. Master-Replica-Datenbanken werden z.B. beschrieben in:
Solid Technologies: Smartflow,
   http://www.solidtech.com/products/data distr.html
Oracle 9i: Advanced Replication, Release 2 (9.2), March 2002,
   http://download-uk.oracle.com/docs/cd/B10501 01/server.920/a96567.pdf

## Patentansprüche

1. Verfahren zum Betreiben eines zumindest ein Managersystem (MANAGER, TRANSACTION CREATION LOGIC, TRANSACTION MANAGER, SYNC PROCEDURE) und mehrere Agenten (AGENT 1, AGENT 2, AGENT 3; AGENT) umfassenden Managementnetzes eines Kommunikationssystems, bei dem von einem oder mehreren Agenten (AGENT 1, AGENT 2, AGENT 3; AGENT) voneinander abhängige Daten gespeichert werden, das Managersystem (MANAGER, TRANSACTION CREATION LOGIC, TRANSACTION MANAGER, SYNC PROCEDURE) eine Aufforderung (CHANGES) zur Durchführung einer Mehrzahl von Änderungen betreffend die Daten sendet, lediglich ein Teil der Änderungen durchgeführt wird und das Managersystem (MANAGER, TRANSACTION CREATION LOGIC, TRANSACTION MANAGER, SYNC PROCEDURE) Informationen (UPDATE) über die Durchführung des Teils der Änderungen empfängt,
**dadurch gekennzeichnet,**
**dass** von dem Managersystem (MANAGER, TRANSACTION CREATION LOGIC, TRANSACTION MANAGER, SYNC PROCEDURE) nach dem Empfang der Informationen (UPDATE) entschieden wird, den durchgeführten Teil der Änderungen beizubehalten und das Kommunikationssystem mit dem durchgeführten Teil der Änderungen zu betreiben.

2. Verfahren nach Anspruch 1, bei dem
vor der Versendung der Aufforderung (CHANGES) die Mehrzahl von Änderungen zu einer Transaktion zusammengefasst wird.

3. Verfahren nach Anspruch 1 oder 2, bei dem
das Managersystem (MANAGER, TRANSACTION CREATION LOGIC, TRANSACTION MANAGER, SYNC PROCEDURE) an den oder die Agenten (AGENT 1, AGENT 2, AGENT 3; AGENT), welche den Teil der Änderungen durchgeführt haben, eine Nachricht (REPLCATE) sendet mit einer Anweisung, diese Änderungen beizubehalten.

4. Verfahren nach einem der Ansprüche 1 bis 3, bei dem
die Änderungen Daten einer Mehrzahl von Agenten (AGENT 1, AGENT 2, AGENT 3) betreffen und das Managersystem (MANAGER, TRANSACTION CREATION LOGIC, TRANSACTION MANAGER, SYNC PROCEDURE) eine positive Bestätigung über die Durchführung des Teils der Änderungen von einem Teil der Agenten der Mehrzahl von Agenten (AGENT 1, AGENT 2, AGENT 3) empfängt.

5. Verfahren nach einem der Ansprüche 1 bis 3, bei dem
die Änderungen Daten eines Agenten (AGENT) betreffen und
das Managersystem (MANAGER, TRANSACTION CREATION LOGIC, TRANSACTION MANAGER, SYNC PROCEDURE) eine positive Bestätigung über die Durchführung des Teils der Änderungen von dem Agenten (AGENT) empfängt.

6. Verfahren nach einem der Ansprüche 1 bis 5, bei dem
das Managersystem (MANAGER, TRANSACTION CREATION LOGIC, TRANSACTION MANAGER, SYNC PROCEDURE) den durchgeführten Teil der Änderungen nach Empfang der Informationen (UPDATE) in einer Datenbank des Managersystems (MANAGER, TRANSACTION CREATION LOGIC, TRANSACTION MANAGER, SYNC PROCEDURE) durchführt.

7. Verfahren nach einem der Ansprüche 1 bis 6, bei dem
das Kommunikationssystem mit dem durchgeführten Teil der Änderungen betrieben wird und zu einem späteren Zeitpunkt die nicht durchgeführten Änderungen der Mehrzahl von Änderungen durchgeführt werden.

8. Verfahren nach einem der Ansprüche 1 bis 7, bei dem
die Entscheidung von dem Managersystem (MANAGER, TRANSACTION CREATION LOGIC, TRANSACTION MANAGER, SYNC PROCEDURE) getroffen wird unter Verwendung eines Schwellenwertes hinsichtlich einer Anzahl von Agenten (AGENT 1, AGENT 2, AGENT 3; AGENT), welche den durchgeführten Teil der Änderungen durchgeführt haben, und/oder hinsichtlich einer Anzahl von durchgeführten Änderungen des Teils der durchgeführten Änderungen.

9. Verfahren nach einem der Ansprüche 1 bis 8, bei dem
die Entscheidung von dem Managersystem (MANAGER, TRANSACTION CREATION LOGIC, TRANSACTION MANAGER, SYNC PROCEDURE) getroffen wird unter Berücksichtigung einer Gruppierung von Agenten (AGENT 1, AGENT 2, AGENT 3; AGENT).

10. Verfahren nach einem der Ansprüche 1 bis 9, bei dem
nach dem Empfang der Informationen (UPDATE) nicht durchgeführte Änderungen von dem Managersystem (MANAGER, TRANSACTION CREATION LOGIC, TRANSACTION MANAGER, SYNC PROCEDURE) zu einer Mehrzahl von Transaktionen gruppiert werden.

11. Verfahren nach einem der Ansprüche 1 bis 10, bei dem
zur Synchronisierung von von dem Managersystem (MANAGER, TRANSACTION CREATION LOGIC, TRANSACTION MANAGER, SYNC PROCEDURE) und den Agenten (AGENT 1, AGENT 2, AGENT 3; AGENT) gespeicherten Daten ein Master-Replica-Verfahren eingesetzt wird.

12. Managersystem (MANAGER, TRANSACTION CREATION LOGIC, TRANSACTION MANAGER, SYNC PROCEDURE) für ein Managementnetz eines Kommunikationssystems, welches neben dem Managersystem (MANAGER, TRANSACTION CREATION LOGIC, TRANSACTION MANAGER, SYNC PROCEDURE) mehrere voneinander abhängige Daten speichernde Agenten (AGENT 1, AGENT 2, AGENT 3; AGENT) umfasst, mit
Mitteln zum Erstellen und Senden einer Aufforderung (CHANGES) zur Durchführung einer Mehrzahl von Änderungen betreffend die Daten,
Mitteln zum Empfangen und Verarbeiten von Informationen (UPDATE) über die Durchführung von lediglich einem Teil der Änderungen,
**gekennzeichnet durch**
Mittel zum Entscheiden nach dem Empfang der Informationen (UPDATE), den durchgeführten Teil der Änderungen beizubehalten und das Kommunikationssystem mit dem durchgeführten Teil der Änderungen zu betreiben.
